# EUROPÄISCHE PATENTSCHRIFT

(11) **EP 1 836 083 B1**
(45) Veröffentlichungstag und Bekanntmachung des Hinweises auf die Patenterteilung: **09.07.2008**
(21) Anmeldenummer: 05789040.2
(22) Anmeldetag: 06.10.2005
(51) Int. Cl.: B62D 5/00, F16H 1/28

(54) **DREHZAHLÜBERLAGERUNGSEINRICHTUNG MIT HILFSANTRIEB**
DEVICE FOR SUPERIMPOSING ROTATIONAL SPEEDS, COMPRISING A SERVODRIVE
DISPOSITIF DE SUPERPOSITION DE TOURS-MINUTE COMPRENANT UN ENTRAINEMENT D'ASSISTANCE

(30) Priorität: 06.01.2005 CH 152005
(43) Veröffentlichungstag der Anmeldung: 26.09.2007
(73) Patentinhaber: ThyssenKrupp Presta Aktiengesellschaft, 9492 Eschen (LI)
(72) Erfinder: KENÉZ, Peter, H-1089 Budapest (HU); WAIBEL, Gerhard, A-6858 Bildstein (AT); ALLGÄUER, Rene, A-6844 Altach (AT)
(74) Vertreter: Wegmann, Urs
(86) Internationale Anmeldenummer: PCT/CH2005/000588
(87) Internationale Veröffentlichungsnummer: WO 2006/072186

(56) Entgegenhaltungen:
- EP-A- 0 189 172
- EP-A- 1 354 787
- DE-A1- 19 906 703

## Beschreibung

Die Erfindung betrifft eine Drehzahlüberlagerungseinrichtung mit einer Antriebswelle und einer Abtriebswelle, welche in Längsrichtung zueinander angeordnet sind, eine karosseriefest angeordnete Trägeranordnung, in welcher die Antriebswelle und die Abtriebswelle mindestens teilweise gelagert, drehbar positioniert sind und mit einem Hilfsantrieb mit einem an der Trägeranordnung angeordnetem Stator und mit einem zur Antriebswelle achsparallel drehbar gelagerten Rotor.

Die Erfindung betrifft insbesonders eine Drehzahlüberlagerungseinrichtung mit Hilfsantrieb für ein Lenksystem für nicht spurgebundene Kraftfahrzeuge die, die Drehzahlen des Hilfsantriebes und der Steuereingriffe am Steuerrad durch den Fahrer überlagert und auf die Lenkbewegung der Räder überträgt.

Derartige Drehzahlüberlagerungseinrichtungen werden im Stand der Technik soweit sie für Lenkungssysteme angewendet werden auch als Drehwinkelüberlagerungseinrichtungen bezeichnet. Drehzahlüberlagerung bzw. Drehwinkelüberlagerung sind Synonyme.

Im Stand der Technik sind eine Reihe derartiger Systeme bekannt, wobei das Drehzahlüberlagerungsgetriebe durch ein Planetengetriebe oder auch durch ein Schneckenradgetriebe realisiert wird.

So ist in der DE19823721A1 eine derartige Drehzahlüberlagerungseinrichtung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlüberlagerungen dargestellt werden. Diese im Stand der Technik gezeigte Lösung besitzt aber einige entscheidende Nachteile. Derartige Getriebe bestehen aus einer Vielzahl von Bauteilen. Es werden zwei Hohlzahnradkränze bzw. Planetengetriebe benötigt. Die Herstellung der Einzelteile ist sehr aufwändig und teuer. Die Vielzahl der Zahneingriffe führt zu sehr hohen Genauigkeitsanforderungen, um Spiele zu vermeiden. Weiter muss die gesamte Einrichtung , inklusive Motorgehäuse, vom Fahrer beim Steuern mit gedreht werden. Ein weiterer Nachteil besteht zudem in der aufwendigen Einkopplung der elektrischen Energie für den Elektromotor.

In einem weiteren Stand der Technik, der DE19852447A1, wird eine Lösung zur Drehzahlüberlagerung vorgestellt, bei der ein Elektromotor über einen Schneckenantrieb an das, als Planetengetriebe ausgebildete, Überlagerungsgetriebe angekoppelt ist. Hier ist die Getriebeeinheit karosseriefest angeordnet. Allerdings sind auch mit dieser Lösung eine Reihe von Nachteilen verbunden. Die Einkopplung über ein Schneckengetriebe führt zu sehr kleinen Wirkungsgraden der Drehzahlübersetzung. Weiterhin benötigt die Anordnung erheblichen Bauraum, der, durch die geometrisch bestimmten Lagen der Komponenten zueinander, wenig flexibel ist. Auch hier ist die Herstellung der Einzelteile aufwändig und teuer und die Anforderungen an die Herstelltoleranzen entsprechend hoch.

In der Europäischen Patentanmeldung EP 0 189 172 A2 wird eine Drehzahlüberlagerungseinrichtung für ein Lenkungssystem beschrieben, mit einer karosseriefest angeordneten Trägeranordnung mit Hilfsantrieb, in welcher eine Antriebswelle und eine Abtriebswelle mindestens teilweise drehbar gelagert sind und welche in Längsrichtung zueinander angeordnet sind. Die Antriebswelle ist mit einem ersten Zahnrad drehfest verbunden und die Abtriebswelle ist mit einem zweiten Zahnrad drehfest verbunden, wobei diese Zahnräder die Sonnenräder eines als Differentialgetriebe ausgebildeten Planetengetriebes bilden und dieses Getriebe ein Koppelelement enthält, welches durch einen Motor angetrieben wird.

Die Aufgabe der vorliegenden Erfindung besteht darin, die Nachteile des Standes der Technik zu beseitigen und gleichzeitig eine kompakte Baugruppe bereit zu stellen, die eine Drehzahlüberlagerung mit wenigen und möglichst einfach herzustellenden Bauteilen gestattet. Weiter soll die Verbindung der Energieversorgung des Hilfsantriebes sowie mit im Bedarfsfall verwendeten Sensoren vereinfacht werden.

Die Aufgabe wird erfindungsgemäß durch die Drehzahlüberlagerungseinrichtung entsprechend dem Anspruch 1 gelöst. Die abhängigen Ansprüche 2 bis 13 betreffen bevorzugte Ausführungsformen der Drehzahlüberlagerungseinrichtung. Dabei wird eine Überlagerungseinrichtung zur Drehzahlüberlagerung vorgeschlagen welche umfasst:
- eine Antriebswelle und eine Abtriebswelle, welche in Längsrichtung zueinander angeordnet sind,
- eine karosseriefest angeordnete Trägeranordnung in welcher die Antriebswelle und die Abtriebswelle mindestens teilweise gelagert, drehbar positioniert sind,
- einem Hilfsantrieb mit einem an der Trägeranordnung angeordnetem Stator und mit einem zur Antriebswelle achsparallel, bevorzugt koaxial drehbar gelagerten Rotor, erfindungsgemäss gekennzeichnet, dass die Antriebswelle mit einer ersten Zahnscheibe drehfest verbunden ist, und dass die Abtriebswelle mit einer zweiten Zahnscheibe drehfest verbunden ist, und dass am Rotor mindestens ein weiteres Zahnrad beabstandet von der Drehachse des Rotors rotierbar um die Antriebswelle drehbar um die eigene Achse gelagert angeordnet ist, wobei die Verzahnung des weiteren Zahnrades in beide Verzahnungen der ersten und zweiten Zahnscheibe eingreift.

Durch Rotieren des weiteren Zahnrades, drehbar gelagert am Rotor des Hilfsantriebes auf einer die Rotorachse umlaufenden Kreisbahn, rollt dieses auf beiden Verzahnungen der beiden Zahnscheiben gleichzeitig ab und versetzt diese so in Bewegung, dass die Zahneingriffe zwischen den Verzahnungen des Zahnrades und der beiden Zahnscheiben veränderbar sind. Dies bevorzugt, wenn die Zähnezahl und/oder der Teilkreisdurchmesser der Zahnscheiben unterschiedlich sind. Durch geeignete Wahl der Differenz der Anzahl der Zähne der Zahnscheiben kann das Übersetzungsverhältnis vorgegeben werden.

Die Antriebswelle und die Abtriebswelle müssen nicht als klassisch stab- oder rohrförmige Wellen ausgebildet sein, sie können auch als massive Bauteile mit beispielsweise nicht runder Form, wie beispielsweise als Gelenkteil, oder Teil eines Kugelgewindetriebes oder anderer Komponenten ausgebildet sein. Auch kann die Antriebs- und Abtriebsfunktion gegeneinander vertauscht sein.

Eine besonders einfache und kompakte Anordnung wird erzielt, wenn die Achsen der Antriebswelle und der Abtriebswelle fluchten. In diesem Fall liegen beide Wellen in gleicher Achsen hintereinander und voneinander entkoppelt drehbar gelagert angeordnet. Die beiden Zahnscheiben sind dann mit Vorteil nahe, sich stirnseitig gegenüber liegend angeordnet, wodurch für das weitere Zahnrad ein gleichzeitiger Eingriff in beide Zahnscheiben leicht realisierbar ist.

Die Anordnung wird besonders bevorzugt eingesetzt bei einem Lenkungssystems für ein Kraftfahrzeug.

Dabei liegt im einfachsten Fall die gesamte Überlagerungseinrichtung in einer Achse, dem Drehzentrum der Einrichtung, angeordnet, und die Verzahnungen der Zahnscheiben sind mit ihren Zahnspitzen zueinander parallel angeordnet. Die beiden Verzahnungen der beiden Zahnscheiben können unterschiedliche Teilkreisdurchmesser aufweisen. In der bevorzugten Ausführungsform sind diese Zahnspitzen weg vom Drehzentrum der Überlagerungseinrichtung gerichtet. In der besonders bevorzugten Ausführungsform sind die Verzahnungen unter einem Winkel α grösser 0°, insbesondere im Bereich von 0° bis 100° zu der Orthogonalen zum Drehzentrum ausgerichtet. Die Auslegung erfolgt dabei unter der Berücksichtigung von der Trägheit, dem Wirkungsgrad und den zu übertragenden Drehmomenten und den geforderten Übersetzungsverhältnissen zwischen den beteiligten Getriebegliedern.
Das oder die weiteren Zahnräder sind gleichmässig über den Umfang verteilt direkt mit dem Rotor des Hilfsantriebes, beispielsweise über einen Hilfsträger, verbunden und unter einem, der Ausrichtung der Verzahnungen der beiden Zahnscheiben, entsprechenden Winkel ausgerichtet, so dass die Verzahnungen der Zahnräder an ihrem Aussenumfang in die Verzahnungen der beiden Zahnscheiben eingreifen.

Die Auslegung mit einem Verzahnungswinkel von α grösser als 90° bietet den Vorteil einer Selbstzentrierung des Systems.

Die beiden Zahnscheiben weisen, bevorzugt, eine unterschiedliche Zähnezahl auf, so dass nach einer Umdrehung des Rotors des Hilfsantriebes die beiden Zahnscheiben um den Winkel, den die Differenz der Zähnezahlen der beiden Zahnscheiben ausmacht, im Winkel verschoben sind. Wird die erste Zahnscheibe der Antriebseinheit im Stillstand gehalten, so verdreht sich die Zahnscheibe der Abtriebseinheit um diesen entsprechenden Winkel je Umdrehung des Rotors des Hilfsantriebes. Daraus kann ein Übersetzungsverhältnis zwischen Drehzahl des Rotors des Hilfsantriebes und der Drehzahl der Abtriebseinheit bestimmt werden, das im folgenden als Übersetzungsverhältnis des Überlagerungsgetriebes bezeichnet wird.
Für Lenksysteme sind Übersetzungsverhältnisse im Bereich von 10:1 bis 50:1 häufig gewünscht. Dies bedeutet beispielsweise, dass 50 Umdrehungen des Rotors des Hilfsantriebes zu einer Umdrehung der Abtriebswelle übersetzt wird.
Gleichzeitig soll die gesamte Einrichtung im Durchmesser kleiner als 100mm gehalten sein. Daraus resultieren bevorzugte Winkel α für die Abwinklung der Verzahnungen der Zahnscheiben gegenüber der Orthogonalen zum Drehzentrum des Überlagerungsgetriebes in einem ersten bevorzugten Bereich von etwa 10 bis 30 Winkelgrad oder alternativ in einem zweiten bevorzugten Bereich von Winkeln α von 60 bis 100 Winkelgrad.

Die Trägeranordnung, die bevorzugt als Gehäuse ausgebildet ist, ist direkt oder indirekt mit dem Fahrzeugchassis verbunden.

Mit der Anordnung wird erreicht, dass, solange der Hilfsantrieb nicht in Bewegung gesetzt beziehungsweise gegen die Trägeranordnung blockiert ist, die Antriebsdrehzahl direkt über die erste Zahnscheibe, über die weiteren Zahnräder in die zweite Zahnscheibe und damit auf die Abtriebseinheit übertragen wird. Sobald der Hilfsantrieb die weiteren Zahnräder in Drehung versetzt, addieren sich die Drehzahlen der Antriebseinheit und die, um das Übersetzungsverhältnis des überlagerungsgetriebes übersetzte, Rotordrehzahl. Grundsätzlich ist es dabei unerheblich, ob die Zahnräder durch Drehung des Hilfsträgers um seine eigene Achse, die bevorzugt mit dem Drehzentrum der Drehzahlüberlagerungseinrichtung zusammenfällt oder durch Rotation der Zahnräder um ihre eigene Achse erfolgt. Der letztgenannte Fall ist schwieriger zu realisieren, könnte aber für bestimmte geforderte Drehzahlübersetzungen von Vorteil sein.

Aus dem Betriebszustand des Fahrzeuges, wie Geschwindigkeit, Strassenzustand, gewünschter Lenkeinschlag und weiteren Grössen kann ein Steuersystem Vorgaben für eine geeignete Drehzahlüberlagerung bestimmen und daraus Vorgaben für die Ansteuerung des Hilfsantriebes bestimmen.

In der bevorzugten Ausführungsform ist der Hilfsantrieb ein Elektromotor. Insbesondere wird als Elektromotor ein Permanentmagnet erregter Synchronmotor verwendet, bei dem der Stator mit den Erregerwicklungen fest mit der Trägeranordnung der Einrichtung verbunden ist und der Rotor im Innern koaxial angeordnet ist.

Es ist jedoch auch möglich, die in der vorliegenden Erfindung vorgestellte Überlagerungseinrichtung auch unter der Verwendung eines hydraulischen oder pneumatischen Hilfsantriebes anstelle des Elektromotors zu verwenden. Hier könnte der Hilfskraftantrieb beispielsweise ein Orbitmotor oder eine umgekehrte Flügelzellenpumpe sein.

Wichtige Vorteile der neu vorgestellten Technik bestehen darin, dass das Getriebe aus weniger Bauteilen besteht sowie dass die verwendeten Zahnräder und Zahnscheiben einfacher herzustellen sind, als die Zahnräder für ein Planetenradgetriebe. Die Anforderungen an die Zahnräder für die neue Technik sind geringer, da die Toleranzkette für den gesamten Weg der Drehwinkelübertragung kürzer ist. Besonders vorteilhaft können die Komponenten durch Schmieden, warm oder auch kalt, sowie in Sintertechnologie hergestellt werden.

In einer vorteilhaften Weiterbildung der Erfindung wird in das Überlagerungsgetriebe eine Sicherheitskupplung bzw. eine Schaltung integriert, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen.

Entsprechend der vorgestellten Erfindung ist sowohl die Anordnung der Überlagerungseinrichtung zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass die Einrichtung zwischen Lenkgetriebe und Spurstange oder im Lenkgetriebe angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben.

In alternativen Ausführungsformen ist der Elektromotor parallel zur Achse des Übersetzungsgetriebes angeordnet und wird über ein Stirnrad- oder Schneckenrad- oder Riemen-oder Kettengetriebe an das Übersetzungsgetriebe eingekoppelt.

Die Erfindung wird nun nachfolgend beispielsweise und mit schematischen Figuren für bevorzugte Ausführungsformen näher erläutert. Es zeigen:
- Fig. 1: Schematischer Aufbau eines Lenksystems mit Hilfskraftunterstützung
- Fig. 2: Längsschnitt durch eine erste bevorzugte Ausführungsform für eine Drehzahlüberlagerungseinrichtung.
- Fig. 3: Querschnitt entlang der Schnittebene X-X in Figur 2
- Fig. 4: ein vergrösserter Ausschnitt Y aus Figur 2 mit der Darstellung der Zahneingriffe
- Fig. 5: Längsschnitt durch eine alternative Ausführungsform, mit elastischem Spielausgleich.
- Fig. 6: Längsschnitt durch einen vergrösserten Ausschnitt analog zu Figur 4 für eine weitere alternative Ausführungsform.
- Fig. 7: Räumliche Ansicht der Getriebeeinheit des Überlagerungsgetriebes entsprechend der Ausführungsform, wie sie in Figur 6 gezeigt ist.
- Fig. 8: Räumliche Ansicht der Getriebeeinheit des Überlagerungsgetriebes entsprechend der Ausführungsform, wie sie in Figur 2 gezeigt ist.
- Fig. 9: eine Ausführungsform der Drehzahlüberlagerungseinrichtung mit einstellbare Sicherheitskupplung in perspektivischer Darstellung.
- Fig. 10: eine Drehzahlüberlagerungseinrichtung nach den Figuren 2 und 9 kombiniert mit einer einstellbaren Sicherheitskupplung im Längsschnitt.
- Fig. 11: schematische Darstellung eines anderen Aufbaus der Sicherheitskupplung.
- Fig. 12: und Fig. 13 zeigen zwei Ausführungsformen für die Kontaktscheibe.
- Fig. 14: eine Detailansicht durch die Verriegelungseinrichtung entsprechend dem Ausschnitt Z aus der Figur 10.

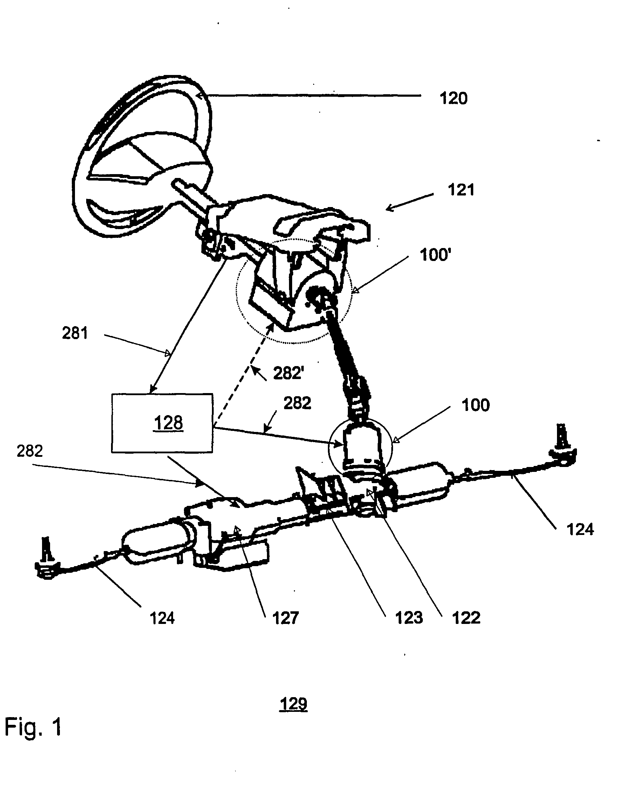

Der in Figur 1 gezeigte schematische Aufbau einer Lenkvorrichtung 129 als Steer-by-wire-Anordnung bzw. Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Drehzahlüberlagerung dient die erfindungsgemäße Überlagerungseinrichtung 100, 100' oder 127 oder die innerhalb des Lenkgetriebes 122 integrierte Überlagerungseinrichtung.

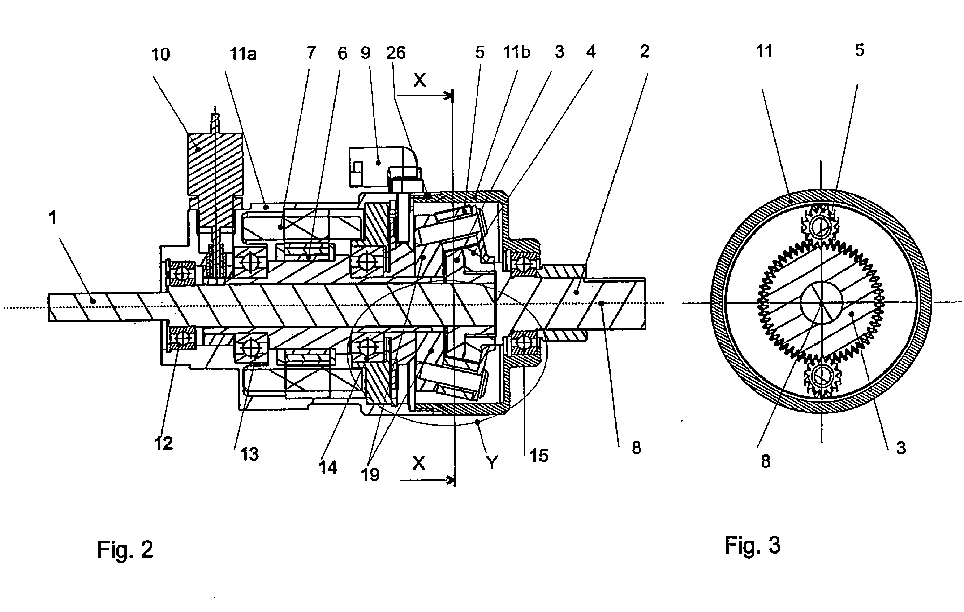

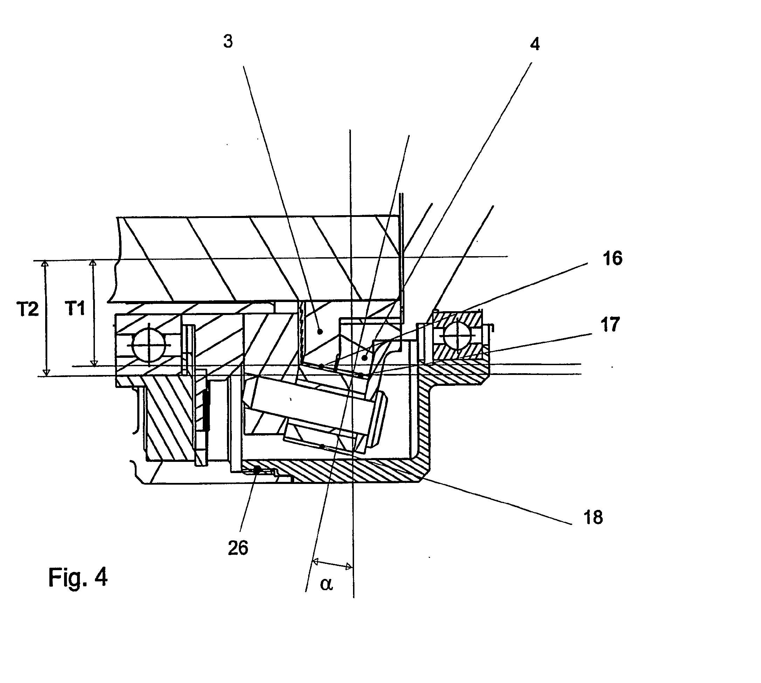

In der bevorzugten Ausführungsform befindet sich die Überlagerungseinrichtung zwischen Steuerrad 120 und Lenkgetriebe 122, beispielsweise an der mit 100 gekennzeichneten Stelle. In den Figuren 2 und 4 ist nur diese Ausführungsform des Überlagerungsgetriebes 100 näher gezeigt.

In einer weiteren Ausführungsform wird die Überlagerungseinrichtung zwischen Lenkgetriebe 122 und Spurstangen 124 oder im Lenkgetriebe angeordnet. Die Überlagerungseinrichtung 127 enthält dann ein Umwandlungsgetriebe zur Übersetzung der Drehbewegung in eine Translationsbewegung, beispielsweise einen Kugelgewindetrieb.

In allen Ausführungsformen wird - im Normalfall - der Fahrerwunsch durch das Steuerrad 120 über eine hier nicht gezeigte Sensorik als Signal 281 in ein Steuergerät 128 eingespeist. Im Steuergerät 128 wird daraus, gegebenenfalls unter Zuhilfenahme eines Sensorsignals des Hilfsantriebes des Lenksystems (Signalleitung hier nicht dargestellt) und/oder der Drehzahlüberlagerungseinheit und weiterer den Fahrzeugzustand beschreibender Signale, die entsprechende Steuerspannung 282 für den Elektromotor bestimmt und an den Elektromotor, der in der Überlagerungseinrichtung 100 angeordnet ist ausgegeben.

Die Erfindung bezieht sich auf die Überlagerungseinrichtung 100 in der Anordnung in einem Lenksystem 129 für ein Kraftfahrzeug. Dabei kann das Lenksystem mit oder ohne Hilfskraftunterstützung ausgelegt sein. Dabei ist es unerheblich ob die eventuell vorhandene Hilfskraftunterstützung des Lenksystems hydraulisch, pneumatisch oder elektrisch erfolgt.

Die Überlagerungseinrichtung 100 weist eine Antriebswelle 1, die direkt oder indirekt vom Steuerrad 120 angetrieben wird, eine Abtriebswelle 2, die direkt oder indirekt die Spurstangen antreibt, eine Trägeranordnung 11a, 11b, einen Hilfsantrieb, bevorzugt ein Elektromotor 6,7 und zwei Zahnscheiben 3,4 sowie mindestens ein weiteres Zahnrad 5 auf.

Anhand der Figuren 2 bis 4 und 8 wird ein bevorzugtes Ausführungsbeispiel für eine derartige Drehzahlüberlagerungseinrichtung im weiteren erläutert.
Die Drehzahlüberlagerungseinrichtung in der hier gezeigten Ausführungsform umfasst folgende Komponenten:
- eine Antriebseinrichtung, hier die Antriebswelle 1,
- eine Abtriebseinrichtung, hier die Abtriebswelle 2,
- ein Hilfsantrieb, umfassend einen Stator 7 mit hier nicht speziell dargestellten Statorwicklungen mit entsprechendem elektrischen Anschluss und einen Rotor 6 mit hier nicht speziell dargestellten Permanentmagneten,
- einer karosseriefesten Trägeranordnung, vorteilhaft als Gehäuse ausgebildet, wie beispielsweise bestehend aus den mindestens zwei Gehäuseteilen 11a und 11b, die die Wellen 1,2 und den Rotor 6 des Hilfsantriebs in den Lagern 12, 15 bzw. 13, 14 lagert und den Stator 7 des Hilfsantriebs trägt, wobei diese Gehäuseteile vorzugsweise mit einem Gewinde 26 verschraubbar sind,
- einen je nach Ausführungsform einteilig mit dem Rotor 6 oder nur drehfest verbunden ausgebildeten Hilfsträger 19 der mindestens ein weiteres Zahnrad 5 trägt und ein erstes Getriebeglied bildet,
- eine erste, an der Antriebswelle 1 antriebsseitig angeordnete, Zahnscheibe 3, die die Verzahnung 16 trägt,
- eine zweite, an der Abtriebswelle 2 abtriebsseitig angeordnete, Zahnscheibe 4, die die Verzahnung 17 trägt,
wobei die Antriebs- und die Abtriebswellen 1,2 vorzugsweise in einer Achse mit einem Drehzentrum 8 angeordnet sind und die Verzahnungen 16, 17 der beiden Zahnscheiben 3, 4 parallel zueinander, mit ihren Zahnspitzen weg vom Drehzentrum 8 der Drehzahlüberlagerungseinrichtung gerichtet und abgewinkelt zur Orthogonalen zu diesem Drehzentrum 8 ausgerichtet sind und mit der Verzahnung 18 des zumindest einen weiteren Zahnrades 5 in Eingriff stehen. Die beiden Zahnscheiben 3,4 sind hierbei stirnseitig, in geringem Abstand zueinander positioniert, angeordnet und ihre Verzahnungen 1,17 verlaufen in gleicher Richtung zueinander ausgerichtet und fluchten miteinander im Eingriffsbereich des weiteren Zahnrades 5. In der bevorzugten Ausführungsform besitzen die Zahnscheiben 3, 4 Verzahnungen 16, 17 mit unterschiedlichen Zähnezahlen und voneinander verschiedenen Teilkreisradien T1, T2. Dabei ist unter Teilkreisradius der Mittelwert zwischen Radius zur Spitze der Verzahnung und dem Radius zum Fuss der Verzahnung in der Mitte der Verzahnungsbreite zu verstehen.
Der Winkel α, unter dem die Verzahnungen 16, 17 von der Orthogonalen zum Drehzentrum 8 abgewinkelt ist, beträgt bevorzugt zwischen 10 und 30°. Aus Symmetriegründen wir die Einrichtung bevorzugt mit zwei oder drei weiteren Zahnrädern 5 ausgelegt.

Wie in den Figuren zu erkennen ist , greift die Verzahnung des mindestens einen weiteren Zahnrades 5 gleichzeitig in beide Verzahnungen 16 und 17 der beiden Zahnscheiben 3 und 4 ein.

Die Antriebswelle 1 wird vom Steuerrad 120 in Drehung versetzt und überträgt ihre Drehung auf die erste, antriebsseitige, Zahnscheibe 3. Über die Zahnflanken der Verzahnung 18 der weiteren Zahnräder 5 wird, die vom Steuerrad 120 in die Verzahnung 16 der ersten, antriebsseitigen, Zahnscheibe 3 eingeleitete, Drehzahl auf die Verzahnung 17 der zweiten, abtriebsseitigen, Zahnscheibe 4 und damit auf die Abtriebswelle 2 übertragen. Unter der Voraussetzung, dass der Hilfsträger 19 in seiner Winkellage zum karosseriefesten Gehäuse 11a, 11b fest steht, drehen sich bei der Drehzahlübertragung von der Eingangswelle 1 auf die Ausgangswelle 2 die weiteren Zahnräder 5 um ihre eigene Achse. Die Ausgangsdrehzahl an der Abtriebswelle 2 ist dann bestimmt durch die Eingangsdrehzahl an der Antriebswelle 1 multipliziert mit dem Quotienten aus der Anzahl Zähne der Verzahnung 16 der ersten, antriebsseitigen, Zahnscheibe 3 geteilt durch die Anzahl der Zähne der Verzahnung 17 der zweiten, abtriebsseitigen, Zahnscheibe 4.

Wird der Hilfsantrieb angetrieben, so wird die Drehzahl dessen Rotors 6 auf den Hilfsträger 19 übertragen und dabei die weiteren Zahnräder 5 in zusätzliche Rotation um ihre eigene Achse versetzt. Dadurch werden die beiden Zahnscheiben 3, 4 gegeneinander in eine Relativverdrehung, die von den Zähnezahlen der Verzahnungen 16, 17 abhängt, versetzt. Mit einfachen getriebetechnischen Überlegungen kann hier ein gewünschtes Übersetzungsverhältnis von Drehzahl des Hilfsträgers 19 zur Drehzahl der Abtriebswelle, bei nicht drehender Antriebswelle, ausgelegt werden. Allerdings gestattet der grundsätzliche Getriebeaufbau nur eine Drehzahluntersetzung, was insoweit vorteilhaft ist, weil der eingesetzte Elektromotor dadurch mit einer höheren, für Elektromotoren günstigeren Drehzahl, betrieben werden kann.

Die Zahnscheiben 3,4 können auch als innenverzahntes Hohlzahnrad ausgebildet sein. In diesem Fall rollt dann das weitere Zahnrad an dieser Innenverzahnung 16,17 ab. Die Ausführung mit aussenverzahnten Zahnscheiben 16,17 und abrollen des weiteren Zahnrades 5 auf dieser Aussenverzahnung wird allerdings bevorzugt, da damit der Aufbau vereinfacht ist.

Alternativ zur in den Figuren gezeigten Lösung kann der Hilfsantrieb auch über einen Getriebe-, Riemen- oder Kettentrieb in die Drehzahlüberlagerungseinrichtung eingekoppelt sein. Hier kann dann sowohl der Rotor oder nur ein einziges oder natürlich auch mehrere der weiteren Zahnräder 5 in Drehung um ihre eigene Achse versetzt sein. Ebenso kann der Hilfsantrieb, anstelle der bevorzugten Ausführung als elektronisch kommutierter Elektromotor, aufgrund der karosseriefesten Anordnung seines Stators, in sehr einfacher Weise als hydraulischer oder pneumatischer Antrieb ausgebildet sein.

In dieser Ausführungsform mit besonders wenig Einzelteilen wird die Trägeranordnung als mindestens zweiteiliges Gehäuse 11a, 11b ausgelegt, wobei die beiden Gehäusehälften 11a und 11b miteinander so verschraubt sind, dass die Verzahnungen der Zahnscheiben 3, 4 und der weiteren Zahnräder 5 spielfrei aber nicht verklemmt in Eingriff gebracht sind, wodurch ein Spielausgleich während der Montage der Drehzahlüberlagerungseinrichtung erreicht ist. Die Axialpositionierung, durch entsprechendes Anziehen der Gehäuseverschraubung 26, erfolgt unter Messung der entsprechenden Winkelspiele zwischen Eingangswelle 1, Ausgangswelle 2 sowie Rotor 6 und Messung entsprechend wirkender Momente beim Verdrehen der Eingangswelle 1, Ausgangswelle 2 sowie des Rotors 6, wobei die Momente möglichst minimale Werte annehmen sollen und die Spiele vorgegebene Werte, beispielsweise 0,5 Winkelgrad nicht überschreiten sollen.

Die Anzahl der weiteren Zahnräder 5 sollte möglichst klein sein, da in jedem Zahneingriff der Verzahnungen 18 der weiteren Zahnräder 5 in die Verzahnungen 16, 17 der beiden Zahnscheiben 3, 4 die Ausrichtung der Zähne der Verzahnungen 16, 17 zueinander korrespondieren müssen, was die möglichen Zähnezahldifferenzen und damit mögliche Übersetzungsverhältnisse der Einrichtung einschränken. So kann beispielsweise mit zwei weiteren Zahnrädern 5 die Verzahnung 16 der ersten Zahnscheibe 3 mit 54 und die der zweiten Zahnscheibe 4 mit 56 Zähnen ausgelegt sein, was zu einer Übersetzung von Reziprokwert aus eins minus Quotient aus Anzahl Zähne erster Zahnscheibe 3 geteilt durch Anzahl Zähne zweiter Zahnscheibe 4 zu dem Ergebnis von 27 Rotorumdrehungen je Umdrehung der Abtriebswelle 2 bei nicht drehender Antriebswelle 1 führt.
Wird ein drittes weiteres Zahnrad 5 eingeführt, muss wegen der Korrespondenz die Zähnezahldifferenz 3 betragen, so dass das Übersetzungsverhältnis nun zu 18 Rotorumdrehungen je Umdrehung der Abtriebswelle 2 bei nicht drehender Antriebswelle 1 führt. Die Zähnezahl des weiteren Zahnrades 5 ist für die Bemessung des Untersetzungsverhältnisses nicht massgebend. Allerdings müssen die Zähne modulmässig in die Zähne der beiden Zahnscheiben 3,4 passen. Wenn mehr als ein weiteres Zahnrad 5 verwendet wird, sollten diese mit Vorteil am Rotor bzw. am Hilfsträger 19 über dessen Drehkreis gleichmässig verteilt angeordnet werden, um die einwirkenden Kräfte gleichmässig auf zu teilen. In diesem Fall muss bei der Bemessung auch dafür gesorgt werden, dass die Verzahnungen 16,17 der beiden Zahnscheiben 3,4 bei jedem der weiteren Zahnräder 5 der Eingriff mit den Zahnscheiben korrespondierend ist.

Die bevorzugte Ausführungsform der Drehzahlüberlagerungseinrichtung umfasst zusätzlich eine Drehzahl- bzw. Drehwinkelmesseinrichtung 9 und eine Sicherheitskupplung 10.

Die Drehzahlmesseinrichtung 9 wird verwendet, um mindestens eine der Drehzahlen der Antriebswelle 1, der Abtriebswelle 2 und/oder des Rotors 6 zu erkennen bzw. zu messen und an das Steuergerät 128 weiterzuleiten, so dass daraus die Ansteuerung des Hilfsantriebes oder auch anderer hier nicht dargestellter Baugruppen im Fahrzeug, wie ein Antiblockiersystem, angesteuert wird.

Das erfindungsgemässe Überlagerungsgetriebe kann so ausgelegt sein, dass eine zumindest teilweise Selbsthemmung zwischen Antriebswelle 1 und Abtriebswelle 2 erreicht ist. Das bedeutet, dass für den Fall des unbestromten und unblokkierten Rotors 6 des Hilfsantriebes die Drehzahl der Antriebswelle 1 direkt auf die Drehzahl der Abtriebswelle 2 übertragen wird. Derartige Kopplungen werden durch entsprechende Getriebeübersetzungen erreicht. Dennoch ist es häufig gewünscht, eine Sicherheitskupplung oder Verriegelungseinrichtung zu integrieren.

Die Sicherheitskupplung 10 ist im Ausführungsbeispiel sehr einfach gestaltet, da durch den Aufbau der Drehzahlüberlagerungseinrichtung eine einfache Verriegelung des Gehäuses mit dem Rotor des Hilfsantriebes ausreicht, um eine vollständige Kopplung der Drehzahl des Steuerrades 120 mit der Drehzahl der Abtriebswelle 2 und somit die vollständige Kontrolle des Fahrers über das Lenksystem zu gewährleisten. Im einfachsten Fall wird die Verriegelung durch einen Stift, der in entsprechende Aussparungen am Rotor 6 eingreift realisiert. Durch das Übersetzungsverhältnis zwischen Abtriebsdrehzahl und Rotordrehzahl sind die Belastungen der Verriegelung nicht sehr gross, so dass es sogar möglich ist, die Verriegelung durch einen Reibschluss herzustellen. Aus Sicherheitsgründen wird jedoch der Verriegelung durch Formschluss der Vorrang gegeben.
Somit ist im Verhältnis nur ein geringes Verriegelungsmoment im Vergleich zu dem vom Steuerrad auf die Antriebswelle zu übertragenden Moment erforderlich. Allerdings sind die Festigkeitsanforderungen an die Verriegelungsmechanik aufgrund des geringen erforderlichen Verriegelungsmomentes gering. Aufgrund der hohen Drehzahlübersetzung zwischen Rotor und Abtriebswelle kann im Notfall eine unkontrollierte Verdrehung des Rotors für einen grossen Winkelbereich, beispielsweise bis 30°, zugelassen werden, bis die Verriegelung einrastet. Der Lenkwinkel würde dann beispielsweise nur um etwa 1° verfälscht werden. Das hat zur Folge, dass die Verriegelung mittels Formschluss durch Eingreifen eines Stiftes in eine Bohrung einfach und sicher gestaltet werden kann. Durch den grundsätzlich ungefährlichen grossen Verstellwinkel des Rotors gegenüber dem Gehäuse können relativ wenige und grosse Vertiefungen am Umfang des Rotors vorgesehen sein, was zu konstruktiv einfachen Gestaltungsmöglichkeiten führt.

Die karosseriefeste Anordnung der Trägeranordnung bzw. des Gehäuses 11a, 11b gestattet eine sehr einfache und ausfallsichere elektrische Anbindung des Systems an die Fahrzeugelektronik. Auch kann die hier gezeigte Verriegelungseinrichtung einfach angeordnet und angesteuert werden. So ist beispielsweise eine hydraulische oder eine elektrohydraulische Ansteuerung alternativ zur bevorzugten elektrischen Ansteuerung einfach darstellbar.

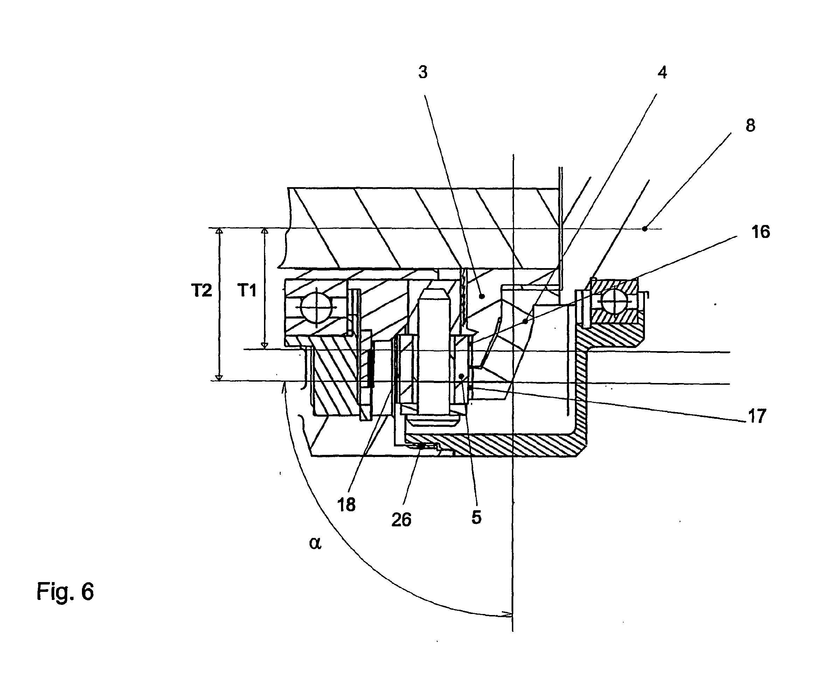

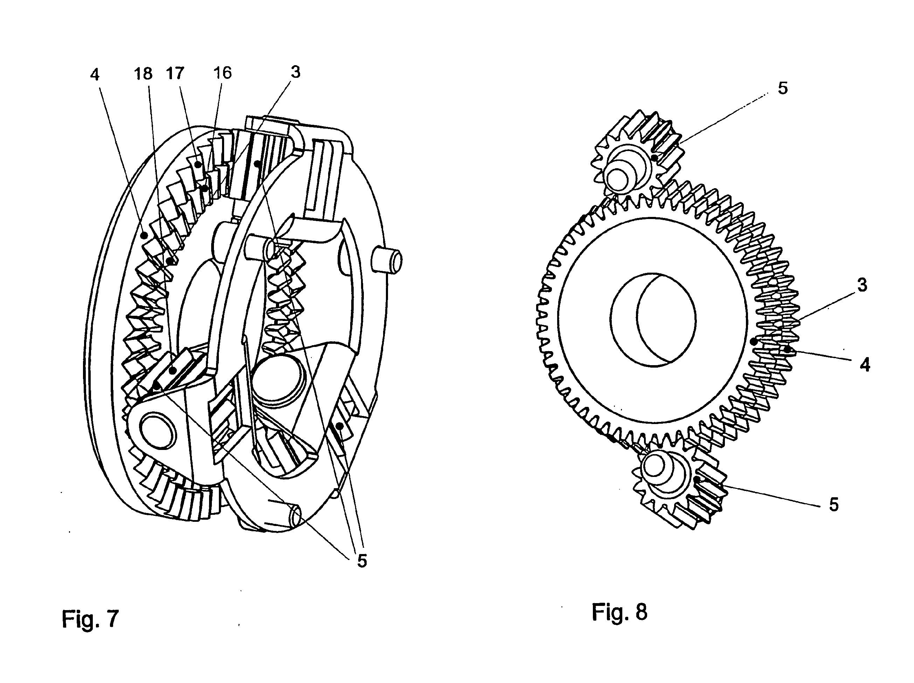

In Figur 7 zeigt eine weitere Ausführungsform der Drehzahlüberlagerungseinrichtung. In Figur 6 ist ein vergrösserter Ausschnitt analog dem in Figur 4 gezeigten für diese weitere Ausführungsform der Drehzahlüberlagerungseinrichtung gezeigt. In diesem Beispiel sind die Verzahnungen 16, 17 der beiden Zahnscheiben 3, 4 um den Winkel α von 90 Winkelgrad zur orthogonalen zur Drehachse 8 abgewinkelt angeordnet. Entsprechend ist das weitere Zahnrad 5 mit seiner Drehachse orthogonal zur Drehachse 8 angeordnet. Die Funktion entspricht den in den übrigen Figuren dargestellten Funktion.

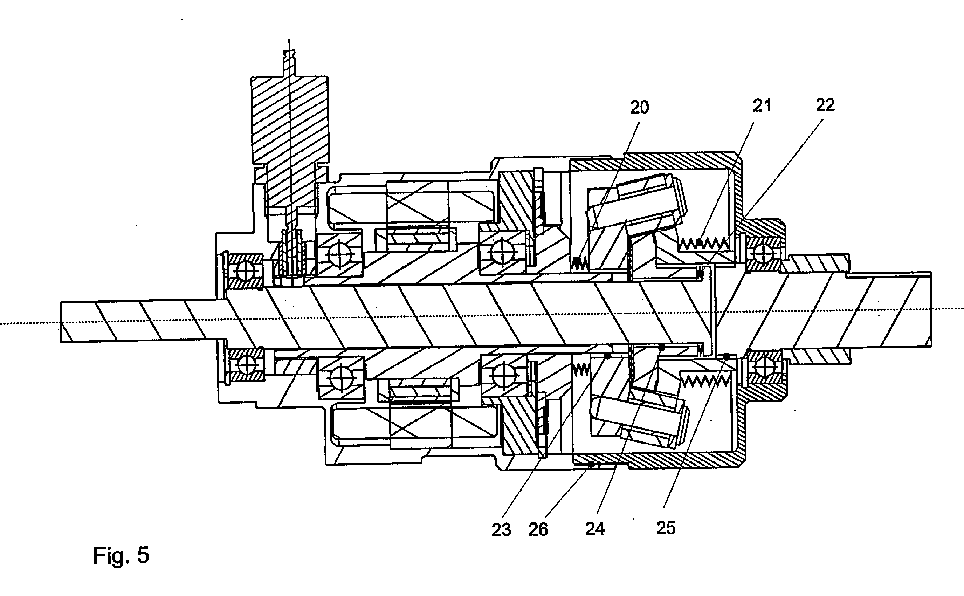

In Figur 5 ist die Drehzahlüberlagerungseinrichtung in einer alternativen Ausführungsform mit Spielausgleich dargestellt. Der hier gezeigte Lösungsvorschlag für den Spielausgleich ist auch für die in der in Figur 6 gezeigten Variante anwendbar. Hier sind elastische oder dämpfende Elemente 20, 21, 22, im einfachsten Fall Schraubenfedern, genauso möglich aber auch Gummipuffer, eingesetzt, die die Verzahnungen in den Eingriff drücken und dadurch Spiele ausgleichen. Damit die Zahnscheiben 3 und 4, sowie die weiteren Zahnräder 5 in Eingriff gedrückt werden können, sind die Zahnscheiben 3,4 über die Mitnahmeverzahnungen 24 bzw. 25 mit der Antriebswelle 1 bzw. der Abtriebswelle 2 drehfest aber axial verschieblich verbunden. Entsprechend ist der Hilfsträger 19 für die weiteren Zahnräder 5 über die Mitnahmeverzahnung 23 mit dem Rotor 6 des Hilfsantriebes drehfest aber axial verschieblich verbunden.

Alternativ können auch nur eine oder zwei der elastischen bzw. dämpfenden Elemente eingesetzt werden und entsprechend nur eine oder zwei Mitnahmeverzahnungen vorgesehen sein. In der Figur 5 ist die Palette der Möglichkeiten für eine Spielverringerung und -dämpfung und / oder Geräuschdämpfung dargestellt. Dabei ist es ebenso möglich elastische und dämpfende Elemente zu kombinieren, indem ein Element beide Funktionen beinhaltet oder ein Element als reine Feder, während ein anderes Element als reiner Dämpfer ausgelegt ist.

Es ist ebenso möglich, auf derartige elastische oder dämpfende Elemente zu verzichten und die Spielfreiheit bei der Montage durch entsprechende axiale Einstellung und anschliessende Befestigung der Zahnscheiben 3, 4 bzw. des Hilfsträgers 19 zu erreichen.

Hier zeigt sich auch ein besonderer Vorteil dieser hier vorgestellten Anordnung gegenüber Lösungen mit klassischen Planetenradgetrieben, bei denen ein derartiger Spielausgleich prinzipiell nicht möglich ist. Dieser Vorteil ist in der Hauptsache durch die abgewinkelte Anordnung der Verzahnungen erreicht.

Weiter bietet die abgewinkelte Anordnung der Verzahnungen den Vorteil, die gewünschte Funktion der Drehzahlüberlagerung mit weniger verzahnten Komponenten und auch mit insgesamt weniger und einfacher herzustellenden Komponenten darzustellen. Durch die Abwinklung hat die Verzahnung 17 der abtriebsseitigen Zahnscheibe 4 einen grösseren mittleren, häufig auch als Teilkreisdurchmesser bezeichneten, Durchmesser T2 als die Verzahnung 16 der antriebsseitigen Zahnscheibe 3 mit ihrem Teilkreisdurchmesser T1. Dadurch kann das weitere Zahnrad 5 einteilig mit einer durchgehenden Verzahnung ausgebildet sein und dennoch in Eingriff mit den unterschiedlichen Zähnezahlen der beiden Zahnscheiben gebracht werden.

Das Überlagerungsgetriebe kann in allen Ausführungsformen mit verschiedenen Zahnformen ausgebildet sein. Es sind dabei Schrägverzahnungen und spezielle Zahnkonturen zur Geräuschminderung und Verringerung der Toleranzempfindlichkeit möglich.

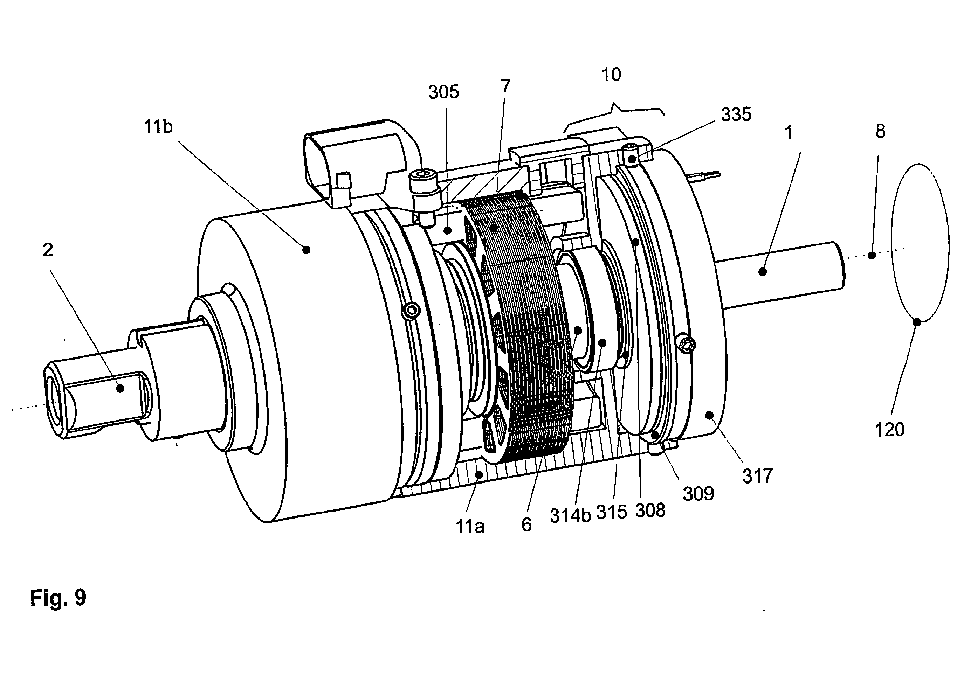

Wie bereits oben erläutert wurde , ist für verschiedene Anwendungen vorgesehen, eine Sicherheitskupplung in die Drehzahlüberlagerungseinrichtung zu integrieren. Die Aufgabe dieser Sicherheitskupplung besteht darin, im Falle einer Fehlfunktion, beispielsweise eines Sensorfehlers, eines Softwarefehlers oder von Stromausfall der Bordspannung, die entsprechend zu einem Fehler bei der Ansteuerung des Hilfsantriebes führen würden, die sichere Kupplung zwischen Antriebswelle 1 und Abtriebswelle 2 herzustellen. Neben der oben bereits vorgestellten Lösung für eine derartige Sicherheitskupplung oder auch Verriegelungseinrichtung 310 ist in den Figuren 9 bis 14 eine weitere Ausführungsform für eine Sicherheitskupplung mit verschiedenen Varianten dargestellt. Aus dieser Weiterführung der Erfindung ergeben sich zusätzliche Vorteile.

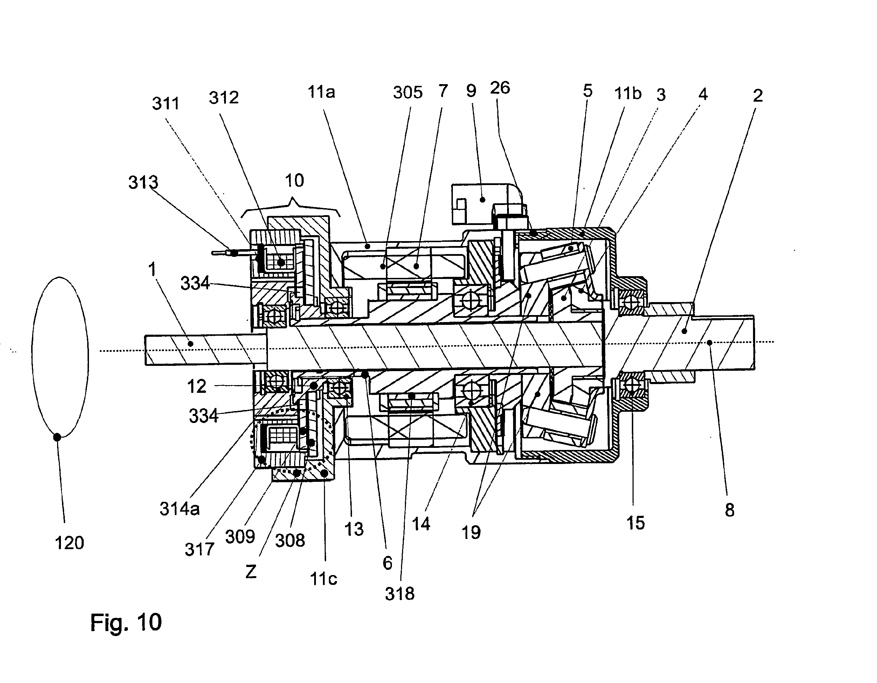

In Figur 9 ist schematisch und in dreidimensionaler Ansicht eine erfindungsgemässe Drehzahlüberlagerungseinrichtung dargestellt kombiniert mit einer bevorzugten, einstellbaren Sicherheitskupplungsanordnung 10, wobei in Figur 10 die Vorrichtung im Querschnitt und mehr detailliert dargestellt ist. Erfindungsgemäss ist für die Drehzahlüberlagerungseinrichtung für ein Fahrzeuglenksystem mit einer Abtriebswelle 2, die zur Antriebswelle 1 in deren Achsrichtung ausgerichtet ist, einer Trägeranordnung 11a, 11b, 11c, welche die Abtriebswelle 2 und die Antriebswelle 1 mindestens teilweise gelagert drehbar positioniert, einem Hilfsantrieb 305, 6, 7 mit einem Rotor 6, der mit einem ersten Getriebeelement 19, dem Hilfsträger 19, drehfest verbunden ist und eine einstellbare Verriegelungseinrichtung 10 zur wahlweisen drehfesten Kopplung zwischen Abtriebswelle 1 und Antriebswelle 2 aufweist, vorgesehen, dass die Trägeranordnung 11a, 11b, 11c drehfest gegenüber der Karosserie angeordnet ist, der Rotor des Hilfsantriebes 305, 6, 7 koaxial die Abtriebswelle 2 und/oder Antriebswelle 1 umschliesst, das erste Getriebeelement 19 mit einer Drehzahlübersetzung kleiner 1 die Drehzahl des Rotors 6 auf die Drehzahl der Abtriebswelle 2 überträgt, und der Rotor mit einer konzentrisch die Achsrichtung der Abtriebswelle 2 und Antriebswelle 1 umschliessenden ferromagnetischen oder permanentmagnetischen ersten Kontaktelement 308 drehfest verbunden ist, wobei die drehfeste Kopplung zwischen Abtriebswelle 2 und Antriebswelle 1 durch einen Reibschluss des ersten Kontaktelementes 308 mit einem zweiten Kontaktelement 309, das drehfest mit der Trägeranordnung 11a, 11b verbunden ist, erzielt ist und die für die Reibkraft erforderliche Anpresskraft durch eine magnetische Kraft erzeugt ist und wobei zumindest eines der beiden Kontaktelemente 308, 309 in Achsrichtung verschieblich ist. Mindestens eines der beiden Kontaktelemente 308, 309 kann vorzugsweise scheibenförmig ausgebildet sein und/oder aber auch konusförmig.

Die Antriebswelle 1 und Abtriebswelle 2 liegen in einer Achse 8 zueinander ausgerichtet.

In der gezeigten Ausführungsform ist auf dem Rotor 6 des Hilfsantriebes 305, 6, 7 ein Kopplungselement 315 angeordnet, das die erste Kontaktscheibe 308 axial verschiebbar trägt und das Drehmoment überträgt. Der koaxial die Antriebswelle 1 umschliessende Rotor 6 des Hilfsantriebes wird in einem Wälzlager 314b in der Trägeranordnung 11a, 11b, 11c, die hier als Gehäuse ausgebildet ist, drehbar gelagert. Die Elemente der Verriegelungseinrichtung 10 können in einem separaten Teilgehäuse 317 als Baugruppe gefasst sein, die separat hergestellt wird und mechanisch mit der Trägeranordnung 11a, 11b, 11c verbunden wird. Diese Verbindung kann dabei einfach über eine Verschraubung in ein hier nicht dargestelltes Innengewinde der Trägeranordnung 11 oder über Verschraubungen 335 hergestellt sein.

Im bevorzugten Fall ist der Hilfsantrieb 305, 6, 7 als Elektromotor ausgelegt, dessen Stator 7 fest mit der Trägeranordnung 11 verbunden ist. Je nach Ausführung des Getriebes umschliesst der Stator 7 die Achse 8 der Antriebswelle 1 und/oder Abtriebswelle 2 koaxial. Der Stator 7 trägt die Statorwindungen 305. Der Rotor des Elektromotors ist mit Permanentmagneten bestückt und wird bei entsprechender Bestromung der Statorwindungen 305 in Drehung versetzt. Der Elektromotor ist entsprechend vollständig in die Drehzahlüberlagerungseinrichtung integriert, wodurch eine sehr kompakte und energieeffiziente Auslegung erreicht ist. Der Motor ist so auszulegen, dass er in beide Drehrichtungen drehend angesteuert werden kann. Durch die Verbindung des Rotors mit einem Getriebeglied des Überlagerungsgetriebes, dessen Drehzahl mit einer Drehzahlübersetzung, die kleiner als 1 ist, auf die Abtriebswelle 1 übertragen wird, kann der Elektromotor mit höherer Drehzahl angesteuert werden. Übersetzungsverhältnisse von mehr als 1:20 oder gar mehr als 1:50 sind dabei besonders vorteilhaft. Das heisst mehr als 20 bzw. 50 Rotorumdrehung entsprechen 1 Umdrehung der Abtriebswelle, wenn die Drehzahl der Antriebswelle den Wert 0 hat.

Die Kontaktelemente 308, 309 sind bevorzugt als kreisrunde Scheiben aus Stahl oder einem anderen ferromagnetischem Werkstoff hergestellt. Es können aber auch unterbrochene bzw. gelochte Scheiben sein, was beispielsweise einer besseren Entlüftung beim Öffnen und Schliessen der beiden Kontaktscheiben dient. Im Ausführungsbeispiel ist die erste Kontaktscheibe 308 über ein Kopplungselement 315 mit dem Rotor 6 der Hilfskrafteinrichtung 305, 6, 7 drehfest aber axial verschieblich verbunden.

Die magnetische Anpresskraft wird im einfachsten Fall durch einen Permanentmagnet 311 erzeugt. Dabei kann der Permanentmagnet 311 als zylindrische Scheibe, deren Achse mit der Achse 8 der Antriebswelle 1 bzw. Abtriebswelle 2 zusammenfällt, ausgebildet sein. Es können aber auch mehrere einzelne Permanentmagnete auf eine zylindrische Scheibe aufgebracht sein. Im weiteren wird jede mögliche Ausführungsform der Einfachheit halber mit dem Permanentmagneten 311 bezeichnet.

Das erste Kontaktelement 308 ist durch das Magnetfeld eines Permanentmagneten 311 an das zweite Kontaktelement 309 herangezogen. Das Teilgehäuse 317 sowie eine entsprechende Ankerausbildung sorgen für den magnetischen Schluss. Die Flächenpressung zwischen den beiden Kontaktelementen 308, 309 dient als Reibschluss. Zur Verbesserung der Reibkraft können eine oder beide der Kontaktelemente 308, 309 mit entsprechenden Reibbelägen beschichtet sein. Eine formschlüssige Oberflächenstruktur der beiden Kontaktscheiben 308, 309 wäre zwar naheliegend und denkbar, birgt aber eine Reihe von Nachteilen mit sich. Insbesondere ist dann eine Verriegelung nicht mehr für jeden Relativdrehwinkel zwischen den beiden Kontaktelementen 308, 309 möglich. Auch ist von erhöhtem Verschleiss auszugehen. Insbesondere ist ein Abbremsen einer allfällig noch bestehenden Drehung des Rotors 6 kaum möglich. Dennoch kann eine derartige Lösung im Einzelfall wünschenswert sein.

Im Fall der Verriegelung sind die Kontaktelemente 308, 309 miteinander in Reibkontakt, wodurch der Rotor 6 gegenüber der Trägerstruktur 11 blockiert ist. Der Rotor 6 ist weiter mit einem ersten Getriebeelement 19, dem Hilfsträger 19 verbunden, der damit ebenfalls gegenüber der drehfest bezüglich der Karosserie angeordneten Trägerstruktur 11 blokkiert ist. Somit wird das gesamte Drehmoment, das in die Antriebswelle 1 eingeleitet wird, auf die Abtriebswelle 2 übertragen. Entsprechend wird dabei die Drehzahl der Antriebswelle auf eine Drehzahl an der Abtriebswelle übertragen. Damit ist die Funktion der drehfesten Kopplung zwischen Antriebswelle 1 und Abtriebswelle 2 erzielt. Dieser Fall ist für den Notfall oder auch bei ausgeschaltetem Antriebsmotor des Kraftfahrzeuges wichtig. In diesem Betriebszustand hat der Fahrer die alleinige Kontrolle über die Steuerung der Fahrtrichtung und das Steuerrad ist mit den verschwenkten Rädern mechanisch miteinander gekoppelt. Das ist wichtig, in Fällen mangelnder Energieversorgung des Hilfsantriebes, wie etwa bei Stromausfall, oder auch bei Fehlfunktion der Ansteuerung des Hilfsantriebes. Zur Detektion derartiger Fehlfunktionen können beispielsweise Sensoren 9 in die Drehzahlüberlagerungseinrichtung integriert sein, die eine Überwachung der verschiedenen Drehzahlen bzw. Drehwinkeln an Antriebswelle 1, Abtriebswelle 2 und Rotor 6 ermöglicht.

Im Fall der Entriegelung, bei dem die Drehzahlen bzw. Drehwinkel Antriebswelle 1 und Abtriebswelle 2 zueinander veränderbar sein sollen, werden die Kontaktelemente 308, 309, bevorzugt durch einen kleinen Abstand zueinander, ausser Reibkontakt gebracht. Gleichzeitig wird der Hilfsantrieb mit Energie versorgt, so dass er die Abstützung des von der Antriebswelle 1 eingeleiteten Drehmoments übernimmt. Bedarfsweise wird der Rotor 6 durch den Hilfsantrieb in Drehung versetzt, um die Entsprechende Drehzahl- bzw. Drehwinkelüberlagerung zwischen Antriebswelle 1 und Abtriebswelle 2 zu erreichen.

Es ist besonders vorteilhaft zur Erhöhung der Sicherheit, wenn im Fall der Entriegelung bei Ausfall der Energieversorgung am Hilfsantrieb 305, 6, 7 die Umschaltung in den Fall der Verriegelung, bei dem Abtriebswelle 2 und Antriebswelle 1 drehfest gekoppelt sind, quasi automatisch erfolgt. Zusätzliche Ströme, die die Kopplung bewirken, sollen nicht erforderlich sein. Dieser Vorgang soll zudem für den Fahrer möglichst unmerklich erfolgen.

Dazu soll bevorzugt die Entriegelung durch einen Stromfluss bewirkt werden, während ohne diesen Stromfluss sich das System automatisch verriegelt. In einer Weiterführung der Erfindung wird das dadurch erreicht, dass die magnetische Anpresskraft zwischen der ersten und zweiten Kontaktelement durch ein elektrisch angesteuertes Gegenmagnetfeld aufhebbar ist. Im einfachsten Fall wird dieses Gegenmagnetfeld durch eine umlaufende Spule 312, die über einen elektrischen Anschluss 313 angesteuert wird, erzeugt. Die Spule 312 ist im Ausführungsbeispiel zwischen dem Permanentmagneten 311, die die magnetische Anpresskraft bewirken und der Kontaktscheibe 309 angeordnet. Ist die Spule 312 entsprechend bestromt, schliesst sich der magnetische Kreis zwischen dem Permanentmagneten 311, so dass auf die erste Kontaktscheibe 308 keine oder nur eine sehr geringe Anziehungskraft in Richtung der zweiten Kontaktscheibe 309 wirkt. Damit sinkt die Reibkraft zwischen den beiden Kontaktscheiben, so dass die Verriegelungseinrichtung 10 entriegelt ist. Bei Ausfall der Stromversorgung der Spule 312 bricht das Gegenmagnetfeld unmittelbar zusammen, so dass die Magnetkraft des Permanentmagneten 311 direkt auf die Kontaktscheibe 308 wirkt und diese an die Kontaktscheibe 309 heranzieht.

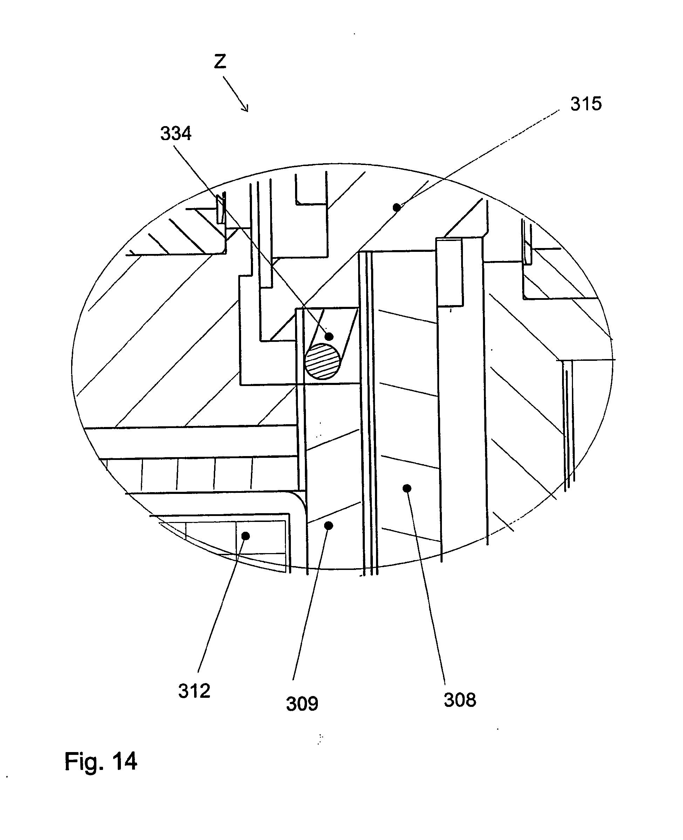

In einer Weiterführung soll der Energieaufwand zum Halten des entriegelten Zustands der Verriegelungseinrichtung 10 gesenkt wird. Dazu umfasst die Verriegelungseinrichtung eine Feder 334, deren Kraft entgegen der magnetischen Anpresskraft wirkt, wie auch in Figur 14 dargestellt. Im Ausführungsbeispiel wird die axial verschiebliche Kontaktscheibe 308 mittels einer Feder 334 vom Permanentmagneten 311 weggedrückt. Mit steigendem Abstand der Kontaktscheibe vom Feld des Permanentmagneten 311 sinkt die Anziehungskraft, so dass das Gegenmagnetfeld nur noch schwächer zu sein braucht, um dessen Wirkung aufzuheben.
Die Federkraft muss jedoch zur Verriegelung der Verriegelungseinrichtung 10 durch die magnetische Kraft des Permanentmagneten 311 überwunden werden. Dazu wird in einer Weiterführung der Erfindung die Federkraft definiert ausgelegt. Im bevorzugten Fall ist die Federkraft so bemessen, dass die auf die erste axial bewegliche Kontaktscheibe 308 von der anderen Kontaktscheibe 309 weg gerichtet wirkende Kraft im von der ersten Kontaktscheibe abgehobenen Zustand im Bereich von etwas grösser als Null bis 10% des Betrages der magnetischen Kraft des Magnetfeldes, das die Anpresskraft erzeugt, liegt. Dadurch ist zum Erhalt des entriegelten Zustandes der Verriegelungseinrichtung 10 nur ein sehr geringer Leistungsbedarf für das Gegenmagnetfeld vorhanden. Gleichzeitig ist das sichere Schliessen der Verriegelungseinrichtung gewährleistet. Sobald sich die Kontaktscheiben 308, 309 aufeinander zu bewegen, steigt die magnetische Kraft auf die bewegliche Kontaktscheibe 308, so dass die benötigte hohe Reibkraft erzeugt wird. Mit der Dimensionierung der Feder wird gleichzeitig das Prellen beim Zusammenschlagen der beiden Kontaktscheiben vermindert. Der kurzzeitig geringfügig höhere Leistungsbedarf zum Entriegeln der Verriegelungseinrichtung 10 wird durch die Einsparung während der gesamten Dauer des Haltens im entriegelten Zustand mehr als kompensiert.

Die Verriegelungseinrichtung 10 kann sehr gut und kompakt in die Drehzahlüberlagerungseinrichtung integriert werden. Dazu wird bevorzugt der Rotor 6 einerseits direkt in der Trägeranordnung 11 drehbar gelagert und die Antriebswelle 1 in dem fest mit der Trägeranordnung verbundenen Teil der Verriegelungseinrichtung 10, das die zweite Kontaktscheibe umfasst, drehbar gelagert. Besonders vorteilhaft ist das andere Ende der Antriebswelle 1 in direkt in der Abtriebswelle 2 gelagert.

Mit Hilfe der nach den oben genannten Merkmalen aufgebauten Drehzahlüberlagerungseinrichtung ist eine Drehzahlüberlagerungseinrichtung mit einer Sicherheitsredundanz für die Lenkung gegen Ausfall der Bordnetzspannung oder andere Störungen gegeben, die sehr schnell und sicher eine mechanische Kopplung zwischen dem Steuerrad und den gelenkten Rädern herstellt. Im Falle eines Ausfalls der Energieversorgung des Hilfsantriebes 305, 6, 7 oder einer anderen Störung der Funktionen des Fahrzeuges wird der Stromfluss zum Betreiben des Gegenmagnetfeldes zum Aufheben der magnetischen Anpresskraft unterbrochen, so dass die erste Kontaktscheibe 308 mit der zweiten Kontaktscheibe 309 mit der magnetisch erzeugten Anpresskraft in reibschlüssigen Kontakt stehen.

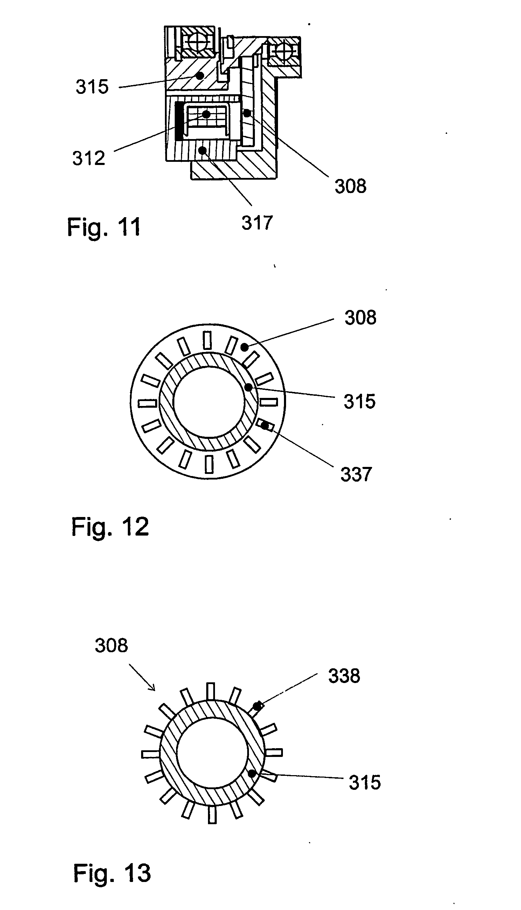

In der Figur 11 ist eine alternative Ausführung für die Sicherheitskupplung dargestellt, bei der die Kontaktscheibe 308 direkt mit dem als Joch ausgeführten Teilgehäuse 317 in Kontakt gebracht wird. Die zweite Kontaktscheibe ist hier als Bestandteil des Teilgehäuses 317 anzusehen.

Das Kontaktelement 308 kann in allen Ausführungsformen als zylindrische Scheibe ausgelegt sein. Zur besseren Entlüftung beim Schliessen der beiden Kontaktflächen ist es jedoch von Vorteil, die Kontaktscheibe 308 mit entsprechenden Aussparungen 337 auszulegen (vgl. Figur 12). Alternativ können auch eine Anzahl von Kontaktelementen 338 (vgl. Figur 13) direkt mit dem Kopplungselement 315 verbunden sein. Die Form der Aussparungen 337 bzw. Kontaktelemente 338 der Kontaktscheibe 308 sind den jeweiligen konstruktiven Gegebenheiten anzupassen. Wichtig ist, dass eine genügende magnetische Anziehungskraft zum zweiten Kontaktelement 309 bzw. direkt zum Teilgehäuse 317, das an seiner zum Kontaktelement 308 hin gerichteten Oberfläche selbst einen entsprechenden Reibbelag aufweisen kann, erreicht ist.

Eines und/oder beide Kontaktelemente können mit Vorteil alternativ in allen Ausführungsformen Scheiben und /oder Elemente mit Flächenabschnitten sein, die mit korrespondierenden konischen oder gewölbten Oberflächen ausgebildet sind. Dadurch wird die Kontaktfläche bei gleichem Durchmesser erhöht und es kann auch eine Zentrierfunktion erzielt werden.

Auch wenn in allen Ausführungsformen Wälzlager gezeigt sind, ist es denkbar und möglich, Gleitlager einzusetzen. Während im Allgemeinen mit Wälzlagern geringere Reibwerte erzielt werden, sind Gleitlager kostengünstiger und benötigen weniger Bauraum. Die Entscheidung wird je nach den Erfordernissen an Bauraum und Energieeinsatz für den Hilfsantrieb getroffen.

Die so vorgestellte Drehzahlüberlagerungseinrichtung wird in Fahrzeuglenksystemen in der Weise betrieben, dass im Falle eines Ausfalls der Energieversorgung des Hilfsantriebes oder einer anderen Störung der Funktionen des Fahrzeuges der Stromfluss zum Betreiben des Gegenmagnetfeldes zum Aufheben der magnetischen Anpresskraft unterbrochen wird, so dass die erste Kontaktscheibe 308 mit der zweiten Kontaktscheibe 309 mit der magnetisch erzeugten Anpresskraft in reibschlüssigen Kontakt stehen. dadurch wird unmittelbar eine drehfeste Kopplung zwischen der Antriebswelle 1 und der Abtriebswelle 2 erzielt. Es ist in diesem Falle wünschenswert, die Kopplung innerhalb möglichst kurzer Zeit und für den Fahrer möglichst unmerklich herzustellen. Als Fehlerfall ist neben dem Energieausfall der Energieversorgung des Hilfsantriebes oder im Fahrzeug auch ein Sensorausfall, ein Problem mit der Ansteuerung oder ein Softwarefehler oder sonstiger Fehler denkbar. So kann beispielsweise durch einen einfachen Kabelbruch, der Messwert der Geschwindigkeit des Fahrzeuges nicht mehr korrekt an die Steuerung der Überlagerungsregelung übertragen werden. Damit kann die Steuerung nicht mehr entscheiden, mit welcher Drehzahlüberlagerung die Einrichtung betrieben werden soll. In einem derartigen Fall, der leicht erkennbar ist, steht genügend Energie zur Verfügung, die drehfeste Kopplung zwischen Abtriebswelle 2 und Antriebswelle 1 aktiv zur erreichen.

In einer bevorzugten Weiterführung der Erfindung wird die Spule für das Gegenmagnetfeld, mit dem das Magnetfeld des Permanentmagneten 311, das die Verriegelungseinrichtung 10 zur wahlweisen drehfesten Kopplung zwischen Abtriebswelle 2 und Antriebswelle 1 bewirkt, aufgehoben wird, zumindest zeitweise so geschaltet, dass die magnetische Anpresskraft zwischen den beiden Kontaktscheiben 308, 309 erhöht ist. Dadurch wird ein beschleunigtes Schliessen der Verriegelungseinrichtung bewirkt. Nach dem die drehfeste Kopplung der Abtriebswelle 2 und der Antriebswelle 1 erreicht ist, kann die Bestromung der Spule 312 für das Gegenmagnetfeld abgeschaltet werden.

## Patentansprüche

1. Drehzahlüberlagerungseinrichtung umfassend:
- eine Antriebswelle (1) und eine Abtriebswelle(2), welche in Längsrichtung zueinander angeordnet sind,
- eine karosseriefest angeordnete Trägeranordnung (11a,11b), in welcher die Antriebswelle (1) und die Abtriebswelle (2) mindestens teilweise gelagert, drehbar positioniert sind,
- einem Hilfsantrieb (6,7) mit einem an der Trägeranordnung (11a, 11b) angeordnetem Stator (7) und mit einem zur Antriebswelle (1) in einer Achse oder achsparallel drehbar gelagerten Rotor (6),
wobei die Antriebswelle (1) mit einer ersten Zahnscheibe (3) drehfest verbunden ist, und dass die Abtriebswelle (2) mit einer zweiten Zahnscheibe (4) drehfest verbunden ist, und dass am Rotor (6) mindestens ein weiteres Zahnrad (5) beabstandet von der Drehachse des Rotors (6) rotierbar um die Antriebswelle (1) drehbar um die eigene Achse gelagert angeordnet ist, wobei die Verzahnung (18) des weiteren Zahnrades (5) in die beiden Verzahnungen (16,17) der ersten und zweiten Zahnscheibe (3,4) eingreift, **dadurch gekennzeichnet, dass** die beiden Zahnscheiben (3, 4) stirnseitig zueinander positioniert angeordnet sind und ihre Verzahnungen (16, 17) in gleicher Richtung zueinander ausgerichtet verlaufen und im Eingriffsbereich des weiteren Zahnrades (5) fluchtend verlaufen.

2. Drehzahlüberlagerungseinrichtung nach einem der vorhergehenden Ansprüche, **dadurch gekennzeichnet, dass** mindestens zwei der weiteren Zahnräder (5) angeordnet sind und im Eingriff mit den beiden Zahnscheiben (3, 4) stehen und diese vorzugsweise am Rotor(6), über dessen Drehkreis, gleichmässig verteilt angeordnet sind.

3. Drehzahlüberlagerungseinrichtung nach Anspruch 2, **dadurch gekennzeichnet, dass** die Lage der Verzahnungen (16, 17) der beiden Zahnscheiben bei jedem Eingriff eines weiteren Zahnrades (5) korrespondierend sind.

4. Drehzahlüberlagerungseinrichtung nach einem der vorhergehenden Ansprüche, **dadurch gekennzeichnet, dass** die Verzahnungen (16, 17) der Zahnscheiben (3, 4) gegenüber der Orthogonalen der Drehachse (8) unter einem Winkel α > 0° abgewinkelt sind, vorzugsweise im Bereich von α = 10° bis 30°.

5. Drehzahlüberlagerungseinrichtung nach einem der vorhergehenden Ansprüche, **dadurch gekennzeichnet, dass** die Verzahnungen (16, 17) der Zahnscheiben (3, 4) gegenüber der Orthogonalen der Drehachse (8) unter einem Winkel α im Bereich von α = 60° bis 100° abgewinkelt sind.

6. Drehzahlüberlagerungseinrichtung nach einem der vorhergehenden Ansprüche, **dadurch gekennzeichnet, dass** die Einrichtung elastische und/oder dämpfende Mittel aufweist, welche die Verzahnungen (16, 17, 18) mit Vorspannung in Eingriff halten zur Erreichung eines Spielausgleiches und/oder einer Geräuschdämpfung.

7. Drehzahlüberlagerungseinrichtung nach einem der vorhergehenden Ansprüche, **dadurch gekennzeichnet, dass** sich die Trägeranordnung (11a, 11b) bzw. das Gehäuse weder mit der Antriebswelle (1) noch mit der Abtriebswelle (2) noch mit dem Rotor (6) mitdreht.

8. Drehzahlüberlagerungseinrichtung nach einem der vorhergehenden Ansprüche, **dadurch gekennzeichnet, dass** die Antriebs- und Abtriebsfunktion der Antriebswelle (1) mit der Abtriebswelle (2) vertauscht ist.

9. Drehzahlüberlagerungseinrichtung nach einem der vorhergehenden Ansprüche, **dadurch gekennzeichnet, dass** die Einrichtung eine Verriegelungsvorrichtung (10) aufweist, die im Fehlerfall den Rotor(6) mit dem Stator (7) und/oder der Trägeranordnung (11a, 11b) drehfest verriegelt.

10. Drehzahlüberlagerungseinrichtung nach Anspruch 9, **dadurch gekennzeichnet, dass** der Rotor (6) mit einem konzentrisch die Achsrichtung der Abtriebswelle (2) und Antriebswelle (1) umschliessenden ferromagnetischen oder permanentmagnetischen ersten Kontaktelement (308) drehfest verbunden ist, wobei die wahlweise drehfeste Kopplung zwischen Abtriebswelle (2) und Antriebswelle (1) durch einen Reibschluss des ersten Kontaktelementes (308) mit einem zweiten Kontaktelement (309), das drehfest mit der Trägeranordnung (11a, 11b) verbunden ist, erzielbar ist und die für die Reibkraft erforderliche Anpresskraft durch eine magnetische Kraft erzeugt ist und wobei zumindest eines der beiden Kontaktelemente (308, 309) in Achsrichtung verschieblich ist.

11. Drehzahlüberlagerungseinrichtung nach Anspruch 10, **dadurch gekennzeichnet, dass** mindestens eines der Kontaktelemente (308, 309) scheibenförmig und/oder konusförmig ausgebildet ist.

12. Drehzahlüberlagerungseinrichtung nach einem der vorhergehenden Ansprüche, **dadurch gekennzeichnet, dass** diese in einem Lenkungssystem für ein Kraftfahrzeug angeordnet ist.

13. Drehzahlüberlagerungseinrichtung nach einem der vorhergehenden Ansprüche, **dadurch gekennzeichnet, dass** Rotor (6) und Stator (7) des Hilfsantriebes koaxial zur Antriebswelle (1) bzw. Abtriebswelle (2) ausgerichtet angeordnet sind.

## Claims

1. Device for superimposing rotational speeds comprising:
- a input shaft (1) and an output shaft (2) arranged in a longitudinal direction relative to each other,
- a support system (11a, 11b) which is fixed to the body and in which the input shaft (1) and output shaft (2) are rotatably positioned so as to be mounted at least in part,
- an auxiliary drive (6, 7) with a stator (7) arranged on the support system (11a, 11b) and with a rotor (6) mounted to be rotatable axially parallel to or in one axis with the input shaft (1),
wherein the input shaft (1) is connected rotationally fixed with a first toothed disc (3) and the output shaft (2) is connected rotationally fixed with a second toothed disc (4), and on the rotor (6) is arranged, spaced from the rotational axis of the rotor (6), at least one further gear wheel (5) so as to be rotatable about its own axis around the input shaft (1), wherein the toothing (18) of the further gear wheel (5) engages in the two toothings (16, 17) of the first and second toothed discs (3, 4), **characterised in that** the two toothed discs (3, 4) are arranged positioned facing each other and their toothing (16, 17) runs aligned to each other in the same direction and flush in the engagement area of the further gear wheel (5).

2. Device for superimposing rotational speeds according to the preceding claims, **characterised in that** at least two further gear wheels (5) are arranged which stand in engagement with the two toothed discs (3, 4) and are preferably arranged on the rotor (6) evenly distributed around its described circle.

3. Device for superimposing rotational speeds according to claim 2, **characterised in that** on each engagement of a further gear wheel (5), the positions of the toothings (16, 17) of the two toothed discs always correspond.

4. Device for superimposing rotational speeds according to any of the preceding claims, **characterised in that** the toothing (16, 17) of the toothed discs (3, 4) is angled in relation to the orthogonal of the rotation axis (8) at an angle α of > 0°, preferably in the range of α = 10 to 30°.

5. Device for superimposing rotational speeds according to any of the preceding claims, **characterised in that** the toothing (16, 17) of the toothed discs (3, 4) is angled in relation to the orthogonal of the rotation axis (8) at an angle α in the range from α = 60° to 100°.

6. Device for superimposing rotational speeds according to any of the preceding claims, **characterised in that** the device has resilient and/or damping means which hold the toothing (16, 17, 18) engaged with pre-tension to compensate for play and/or dampen noise.

7. Device for superimposing rotational speeds according to any of the previous claims, **characterised in that** the support system (11a, 11b) or the housing turn neither with the input shaft (1) nor with the output shaft (2) nor with the rotor (6).

8. Device for superimposing rotational speeds according to any of the preceding claims, **characterised in that** the input and output function of the input shaft (1) is transposed with that of the output shaft (2).

9. Device for superimposing rotational speeds according to any of the preceding claims, **characterised in that** the device has an interlock device (10) which in case of error locks the rotor (6) rotationally fixed with the stator (7) and/or support system (11a, 11b).

10. Device for superimposing rotational speeds according to claim 9, **characterised in that** the rotor (6) is connected rotationally fixed with a ferromagnetic or permanent magnetic first contact element (308) surrounding concentrically the axial direction of the output shaft (2) and input shaft (1), wherein the optionally rotationally fixed coupling between output shaft (2) and input shaft (1) can be achieved by a friction connection of the first contact element (308) with a second contact element (309) that is connected rotationally fixed with the support system (11a, I 16), and the contact force necessary for the friction force is generated by a magnetic force, and wherein at least one of the two contact elements (308, 309) is displaceable in the axial direction.

11. Device for superimposing rotational speeds according to claim 10, **characterised in that** at least one of the contact elements (308, 309) is formed disc-like and/or conical.

12. Device for superimposing rotational speeds according to any of the preceding claims, **characterised in that** this is arranged in a steering system for a motor vehicle.

13. Device for superimposing rotational speeds according to any of the preceding claims, **characterised in that** the rotor (6) and stator (7) of the auxiliary drive are arranged coaxial to the input shaft (1) or output shaft (2).

## Revendications

1. Dispositif de superposition d'angle de rotation comprenant:
- un arbre d'entraînement (1) et un arbre de transmission (2) qui sont alignés l'un avec l'autre en direction longitudinale;
- une structure porteuse (11a, 11 b), qui est montée de façon fixe sur la carrosserie, et dans laquelle l'arbre d'entraînement (1) et l'arbre de transmission (2) sont positionnés à rotation, en y étant au moins partiellement montés sur paliers,
- un entraînement auxiliaire (6, 7) incluant un stator (7) monté sur la structure porteuse (11a, 11 b) et un rotor (6) monté à rotation sur paliers de façon coaxiale avec l'arbre d'entraînement (1) ou parallèlement à celui-ci,
dans lequel l'arbre d'entraînement (1) est attaché de façon fixe en rotation à une première couronne dentée (3), et dans lequel l'arbre de transmission (2) est attaché de façon fixe en rotation à une deuxième couronne dentée (4), et dans lequel au moins une couronne dentée additionnelle (5) est montée sur le rotor (6) à distance de l'axe de rotation du rotor (6), en pouvant graviter autour de l'arbre d'entraînement (1) et en étant logée à rotation sur paliers autour de son axe propre, et dans lequel la denture (18) de la couronne dentée additionnelle (5) s'engrène avec la première et la deuxième couronnes dentées (3, 4), **caractérisé en ce que** les deux couronnes dentées (3,4) sont montées en étant positionnées frontalement l'une par rapport à l'autre, et que la direction d'orientation de leurs dentures (16, 17) est la même et leurs tracés sont alignés, dans la zone d'engrènement de la couronne dentée additionnelle (5).

2. Dispositif de superposition de rotation selon la revendication 1, **caractérisé en ce qu'**au moins deux couronnes dentées additionnelles (5) sont montées, et qu'elles sont engrenées avec les deux couronnes dentées (3, 4) et sont montées sur le rotor (6) en étant de préférence réparties de façon uniforme sur le cercle de gravitation de celui-ci.

3. Dispositif de superposition de rotation selon la revendication 2, **caractérisé en ce que** la position des dentures (16, 17) des deux couronnes dentées sont correspondantes à chaque engrènement d'une couronne dentée additionnelle (5).

4. Dispositif de superposition de rotation selon l'une quelconque des revendications précédentes, **caractérisé en ce que** les dentures (16, 17) des deux couronnes dentées (3, 4) sont inclinées d'un angle α > 0, de préférence compris dans une plage de α = 10° à 30°, par rapport à l'orthogonale à l'axe de rotation (8).

5. Dispositif de superposition de rotation selon l'une quelconque des revendications précédentes, **caractérisé en ce que** les dentures (16, 17) des deux couronnes dentées (3, 4) sont inclinées d'un angle α compris dans la plage de α = 60° à 100° par rapport à l'orthogonale à l'axe de rotation (8).

6. Dispositif de superposition de rotation selon l'une quelconque des revendications précédentes, **caractérisé en ce que** le dispositif comprend des moyens élastiques et/ou amortisseurs qui maintiennent engrenées sous précontrainte les dentures (16, 17, 18), afin d'atteindre une compensation de jeu et/ou un amortissement du bruit.

7. Dispositif de superposition de rotation selon l'une quelconque des revendications précédentes, **caractérisé en ce que** la structure porteuse (11a, 11 b) et le carter ne tournent ni avec l'arbre d'entraînement(1), ni avec l'arbre de transmission (2), ni avec le rotor (6).

8. Dispositif de superposition de rotation selon l'une quelconque des revendications précédentes, **caractérisé en ce que** les fonctions respectives d'entraînement et de transmission de l'arbre d'entraînement (1) et l'arbre de transmission (2) sont échangées.

9. Dispositif de superposition de rotation selon l'une quelconque des revendications précédentes, **caractérisé en ce que** le dispositif comporte un mécanisme de verrouillage (10) qui verrouille de façon fixe le rotor (6) avec le stator (7) ou avec la structure porteuse (11a, 11 b) en cas de défaillance.

10. Dispositif de superposition de rotation selon la revendication 9, **caractérisé en ce que** le rotor (6) est attaché de façon fixe en rotation à un premier élément de contact ferromagnétique ou à aimant permanent entourant concentriquement la direction axiale de l'arbre de transmission (2) et l'arbre d'entraînement(1), dans lequel l'accouplement fixe en rotation réalisable facultativement entre l'arbre de transmission (2) et l'arbre d'entraînement(1) peut être atteint par engagement à friction du premier élément de contact (308) avec un deuxième élément de contact (309) qui est attaché de façon fixe à rotation à la structure porteuse (11a, 11 b), et la force d'appui nécessaire pour exercer la force de friction est générée par une force magnétique, et dans lequel au moins l'un des deux éléments de contact (308, 309) peut coulisser en direction axiale.

11. Dispositif de superposition de rotation selon la revendication 10, **caractérisé en ce qu'**au moins l'un des deux éléments de contact (308, 309) est en forme de disque ou de cône.

12. Dispositif de superposition de rotation selon l'une quelconque des revendications précédentes, **caractérisé en ce qu'**il est monté dans un système de direction d'un véhicule automobile.

13. Dispositif de superposition de rotation selon l'une quelconque des revendications précédentes, **caractérisé en ce que** le rotor (6) et le stator (7) de l'entraînement auxiliaire sont montés en étant orientés coaxialement avec l'arbre d'entraînement (1) et/ou l'arbre de transmission (2).
